# EUROPEAN PATENT SPECIFICATION

(11) **EP 1 973 626 B1**
(45) Date of publication and mention of the grant of the patent: **31.03.2010**
(21) Application number: 06812874.3
(22) Date of filing: 28.11.2006
(51) Int. Cl.: B01D 35/02, B01D 29/11, B01D 29/33

(54) **STRAINER DEVICE**
FILTERVORRICHTUNG
DISPOSITIF DE CRÉPINE

(30) Priority: 12.01.2006 PL 37870206
(43) Date of publication of application: 01.10.2008
(73) Proprietor: FABRYKA ARMATURY HAWLE SP. Z O. O., 62 028 Kozieglowy (PL)
(72) Inventor: KUBICKI, Artur, PL-61-688 Poznan (PL)
(74) Representative: Kowalkiewicz, Wladyslaw
(86) International application number: PCT/PL2006/000086
(87) International publication number: WO 2007/081230

(56) References cited:
- BE-A- 691 112
- DE-A1- 4 031 014
- GB-A- 851 622
- GB-A- 958 148
- GB-A- 2 158 364
- JP-A- 2004 275 958
- US-A1- 2004 020 177

## Description

The strainer as element of water installations, used for removing of impurities in water and non-corrosive liquids industrial systems is the subject matter of the invention.

The Net strainers for removing impurities, consisting of a conduit having flanges at the first and at the second end, which can be mounted as part of the pipeline or installations, having covers attached from below by the use of bolts, are already known. The strainer is a pipe, equipped inside with a serial cylindrical sieve, positioned at an angle of 50 degrees downward with respect to the flow direction. The overflow chamber, where the strainer is mounted, has usually a smaller diameter than the supplying pipeline, and the diameter of the sieve itself is smaller or approximately equal to the diameter of the overflow chamber. The symmetry axis of the filter coincides with the axis of overflow chamber. As result of such solution the cover of overflow chamber is situated also along the axis of this filter. The inlet gaskets of the overflow chamber at the inlet side as well as the cover gasket are situated along one axis line and are pressed simultaneously together when the cover is mounted by the use of bolts, which are parallel to the axis of the chamber. The filter is assembled by putting the filter down to the overflow chamber, the opening of which can be seen under the strainer and is directed downward at an angle of 50 degrees. The assembly of gaskets, of the filter itself and of covers requires a certain protection of the space below strainer and does not guarantee a visual contact with mounted elements, causing defects during exchange procedures. Usually some leaks of the liquid can appear, the device must be repaired of course.

The Publication of Great Britain Patent Application No. GB-A 2 158 364 entitled "Inline pipeline strainer" presents characterized a strainer, which has a body with a central chamber and an axially aligned inlet and outlet and a lateral opening covered by a removable cover plate to allow removal and replacement of a strainer element mounted in the chamber The strainer has the first and second perforated conical sheet metal walls, with an outer wall tapering from the inlet toward outlet and an inner wall tapering from the outlet back to an apex at the inlet. The strainer is positioned by an annular bead at the inlet sealing against the body at the inlet and fitted within an annular groove formed in both the body and the cover. The strainer is supported at the outlet of radially extending projections which engage the strainer at the point where the inner and outer walls are ioined together.

In addition the Publication of Belgian Patent Application No. BE 691 112 entitled "Filtre-tamis avec couvercle de visite" presents the filter is a pipe, equipped inside with a cone shaped sieve to the flow direction. The symmetry axis of the filter coincides with the axis of the overflow chamber. As result of such solution the cover of the overflow chamber is situated also along the axis of this filter. The inlet gaskets of the overflow chamber at the inlet side as well as the cover gasket are situated along one axis line and are pressed simultaneously together when the cover is mounted by the use of bolts, which are parallel to the axis of the chamber.

In furthermore, the Patent Abstracts of Japan Publication No 2004275958 entitled "Strainer" presents a strainer, which has a body equipped with a passage having an inlet and an outlet; a cup-like screen disposed within the passage of the body and having an opening and a bottom; an inlet/outlet hole disposed on a side face of the body for fitting and removing the screen; a detachable lid for blocking the inlet/outlet hole. On an inner circumferential surface forming a flow passage on the inlet side of the body, there is formed an edge-supporting section allowing the insertion of an open edge of the screen and having a step portion allowing the contact with an open end face of the screen. Further, there is provided a pressing means P for pressing the screen in order for the opening end face of the screen to get tight contact with the step portion of the edge-supporting section.

In moreover, the Great Britain Patent Specification No. GB 851 622 entitled "Improvements in Duplex Pipeline Strainers" presents a pipe-line strainer of the duplex type wherin each straining element of the strainer comprises a perforated cylinder, the axis of which is inclined, one end is open and the other end is closed, the open end being supported by a sealing ring which prevents flow of water from the water inlet of the chamber in which the screening element is situated to the outlet thereof except through the screening element and the closed end being supported by a trunnion so that the element can be rotated about its axis and a pipe having orifices or jets for the supply of water under pressure to the periphery of the cylinder for cleaning the latter is arranged adjacent to the said periphery.

In addition. The Great Britain Patent Specification No. GB 958 148 entitled "Improvements in and relating to Filters for Liquids" presents a filter comprising a housing formed with a movable closure member to give access to its interior, an open-turned helix removably mounted within the housing between two end supports and between two or more abutments adapted to engage the outside of the turns of the helix to prevent distortion thereof, the housing being formed with a port at each end, one end support providing a direct flow path from one port to the interior of the helix, the helix being closed at the other end and the other port communicating with a part of the housing-interior which is outside the helix.

The substance of the invention is that the flow chamber has a rectangular side opening, covered with cover which is fastened from outside by the use of stud-bolts and nuts. There are projections inside the chamber, situated on two opposite walls. There are gaskets with cylindrical filter on flat surfaces between projections. The slope angle of the cut off wedge of the gasket takes values between 0.5 and 1.5 degrees. On the contrary, the flat surfaces inside chamber diverge in the direction from the rear wall of chamber towards side opening, with respect to the transversal symmetry axis of chamber, at angles between 1 and 3 degrees. The ring gasket has inside a circular hollow for the cylindrical filter and outside its surfaces are slantwise cut off. The cross section of the ring gasket looks thus like a wedge, which is cut off from one side, where its thickness is minimal, and has a resisting element from the other side where its thickness is maximal.
There are two possible variants of the device. According to the first one the ring gasket has a side hollow on the external side, where an elastic ring is placed. Another variant means that the ring gasket, which is situated on the external side, has circular elastic projections on its side.

The shape of the flow chamber and of the ring gaskets results in a very compact form of the strainer. Its length was minimised and thus it needs less place as the part of the pipeline. Furthermore, the inlet and outlet ends are situated along one axis and the cylindrical filter diameter is larger than the nominal internal pipe diameter. The filter diameter equals approximately its height. The active surface of the sieve was thus increased, the whirling of liquid reduced and consequently such parameters as flow resistance coefficient and flow coefficient were improved. Thanks to the invention some advantages during exploitation of the device were achieved. An exchange of filter requires only free access to the side cover. The flow chamber is then directly accessible and can be visually checked. The interior of overflow chamber, cylindrical filter, ring gaskets, elastic rings, circular projections and cover gaskets can be easily seen.
An example of the device, according to the invention, is shown in:

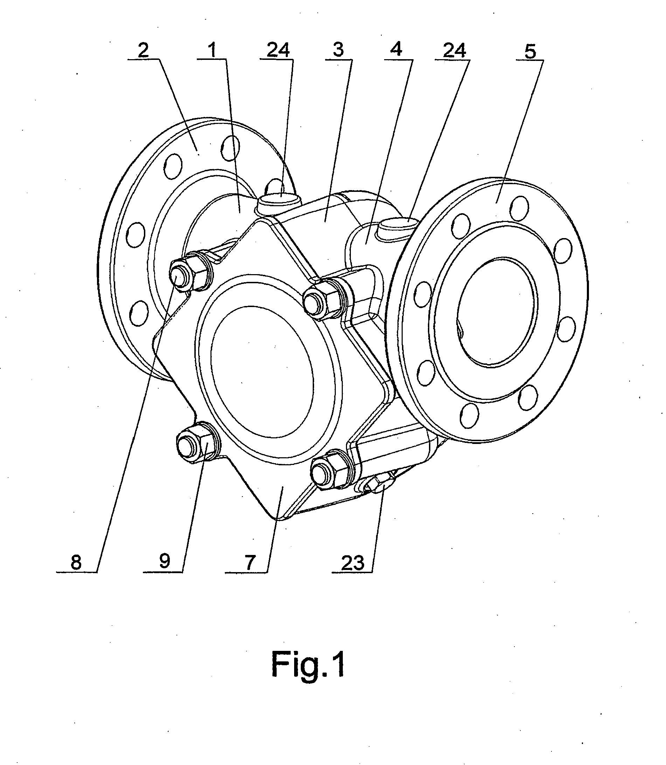

Figure 1 where a side view of the strainer is presented;

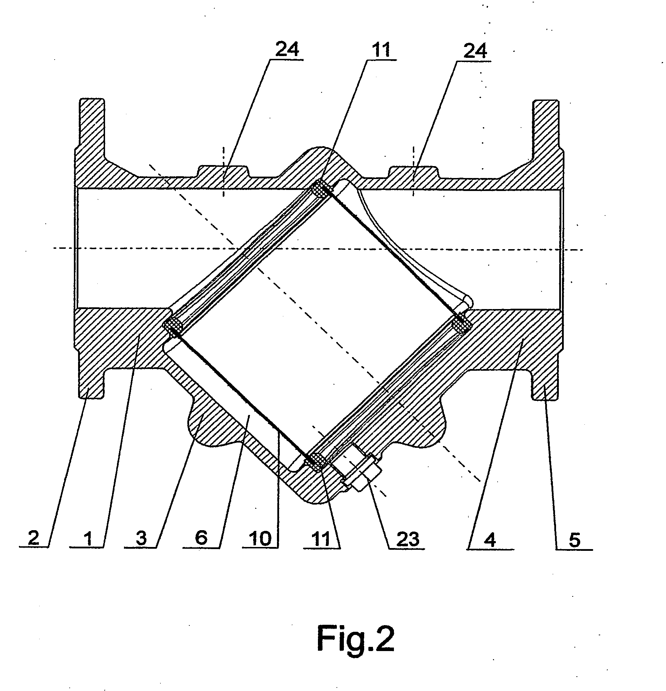

Figure 2 a longitudinal section of the strainer can be seen;

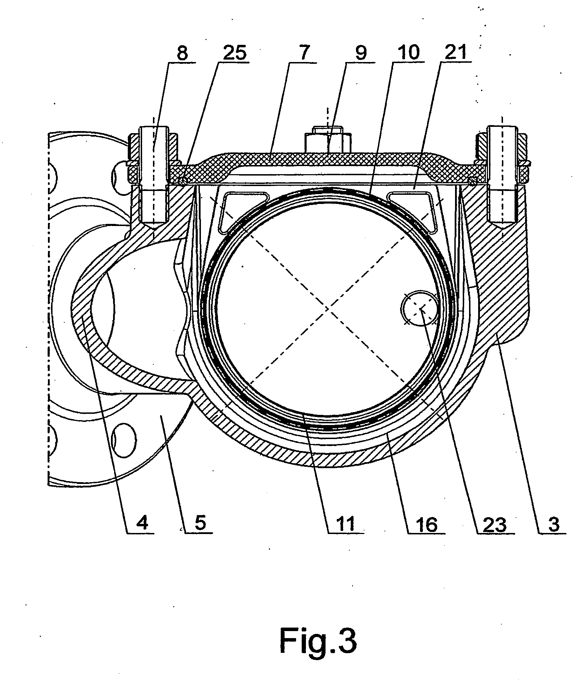

Figure 3 a transverse section of the flow chamber with partial view of the outlet;

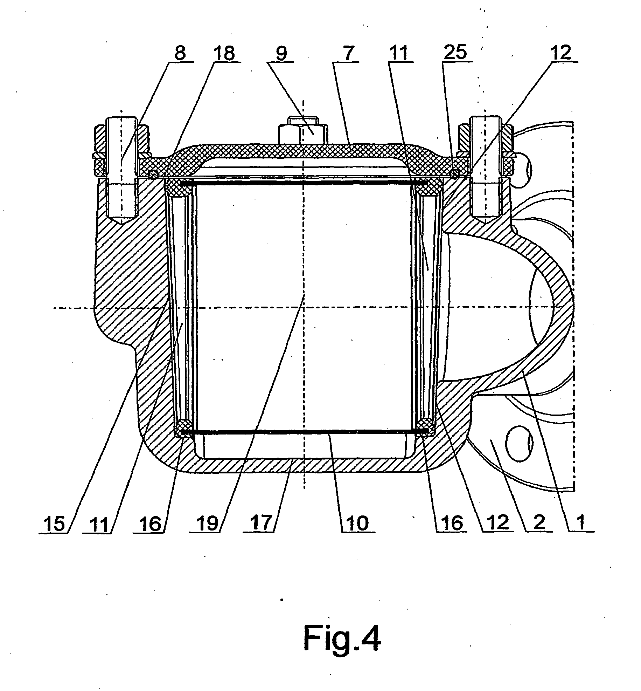

Figure 4 a longitudinal section of the flow chamber with partial view of the inlet;

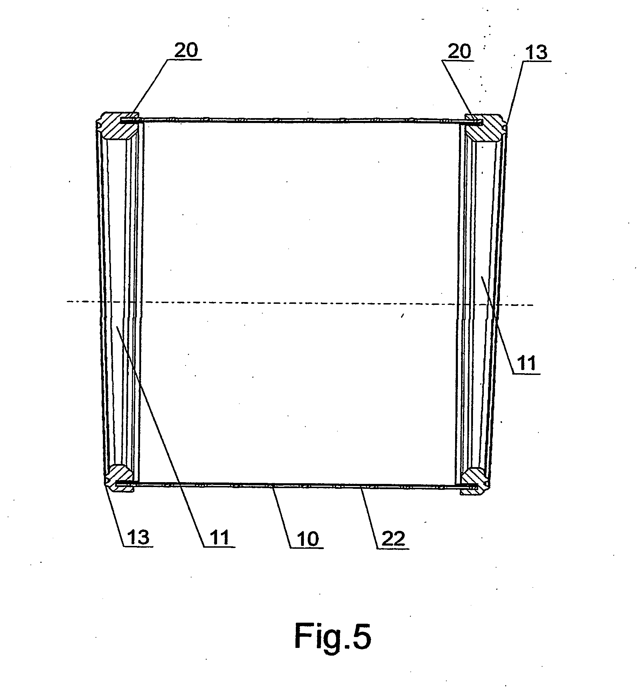

Figure 5 a section of the filter together with ring gaskets having projections;

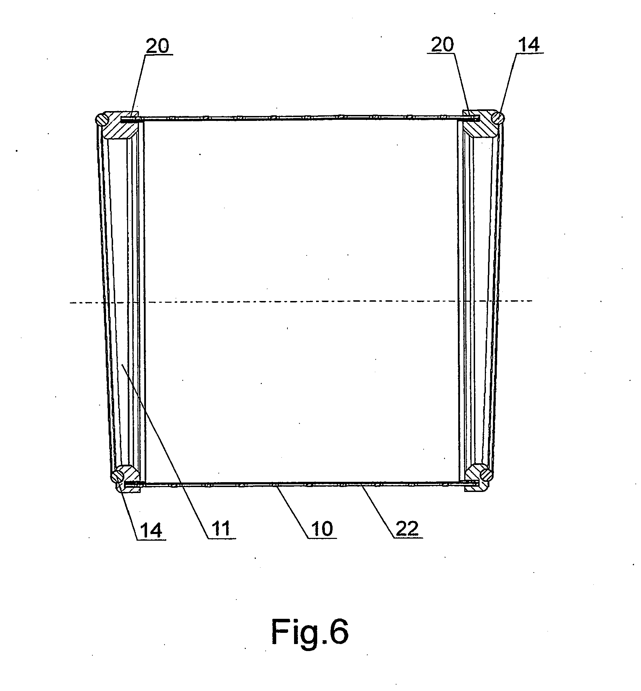

Figure 6 a section of the filter together with ring gaskets and an elastic ring;

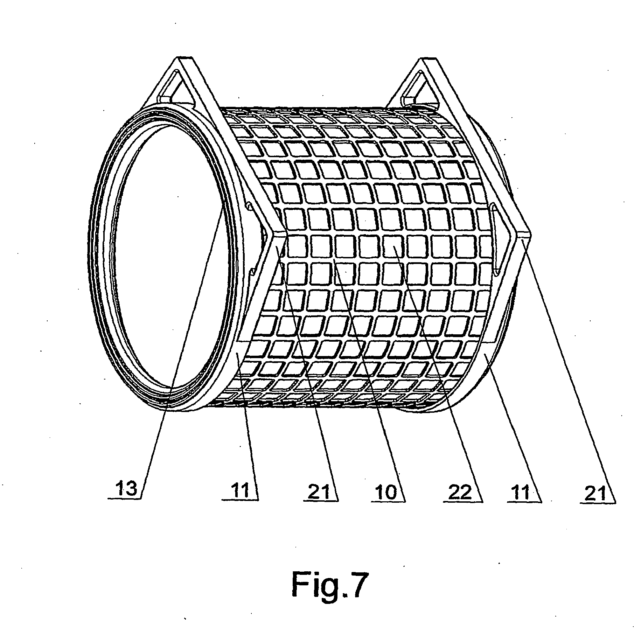

Figure 7 a side view of the filter, with ring gaskets having projections.

The strainer can be made as founded conduit having a the first end 1 with flange 2, connected from the other side, through the flow chamber 3, with the second end 4, having flange 5. The flow chamber 3 has a rectangular side opening 6, covered by cover 7, attached to the conduit by the use of stud-bolts 8 and nuts 9. Inside the overflow chamber 3 the following elements are mounted: cylindrical filter 10 fitted by ring gaskets 11, which have been put to inside through rectangular side opening 6 and pressed together on the convergent flat surfaces of walls 12 and 15 and on surfaces of projections 13 or of elastic rings 14 from the outside of ring gaskets 11, through cover 7, after having screwed on the nuts 9 on stud-bolts 8.

The inside of chamber 3 has projections 16 at wall 12 with opening, close to the first end 1, as well as on the opposite wall 15, which fix the position of ring gaskets 11, together with cylindrical filter 10. On the contrary, walls 12 and 15, between projections 16, have flat surfaces which diverge from the rear wall 17 up to edge 18 of side opening 6, each deviating at angle between 1 and 3 degrees with respect to transversal symmetry axis 19 of the flow chamber 3.

The cylindrical filter 10 is fixed on both ends by ring gasket 11, from inside in circular hollows 20; from outside it has slant-wise shaped surfaces, which are cut off in such way that the ring gasket 11 is in the form of a cut off wedge, from one side it has the minimal thickness, from the other side is ended by a resistant element 21, and is the thickest. The slope angle of the wedge formed ring gasket 11 takes values between 0.5 and 1.5 degrees. According to one possible solution the ring gasket 11 on the outer side has an additional side-channel where an elastic ring 14 is fitted. According to another solution the ring gasket 11 has elastic circular projections 13 on its outer surface.

The strainer body 10 is the element which eliminates impurities. It is made of metal net 22 having meshes depending on requirements concerning separation of impurities and sediments. There is a drain plug 23 at the lowest point of flow chamber 3, for removing impurities. The Nets having very small meshes which are made of a very thin wire are usually placed inside a metallic basket being in the form of cylinder with rectangular holes enabling flow of liquid.

There can be several blinded openings 24 in the upper part of flow chamber 3, in order to enable transducers, which are used for liquid parameter measurements, to be mounted.

The invention eliminates many inconveniences during assembly and exchange procedures, because of the fact, that cover 7 as well as the ring gasket are positioned by grooves and bolts, what means a simple assembly and a safe and tight connection of the cover. Thanks to the ring gasket 11, the cross-section of which is of a cut off wedge form, and thanks to pressing down the filter 10 by cover 7 a tight connection of gaskets 14 and 16 and of projections 13 with surfaces inside chamber 3 is achieved.

Thanks to making the most of flow through ability the flow resistance was reduced, the coefficient Kᵥ increased, and thanks to the slope angle of 45 degrees the active sieve surface was also increased.

The use of gaskets having circular cross-section, integrated with cover, reduces the possibility of gaskets being damaged and makes easier the cover assembly (the gasket is fitted and does not slip out). Thanks to the circular shape of gasket a safe adhesion of the whole surface was achieved. The shape of the strainer simplifies all supervision procedures because the filter is mounted and removed from one side of the chamber, perpendicularly to the liquid flow axis. The conduit diameter is fully occupied by the stream of liquid. The cover 7, covering the chamber, has a gasket 25 which is placed in a circular groove, ensuring the installation to be tight even at high pressures.

## Claims

1. The strainer having an inlet connected with an outlet via a slantwise situated flow chamber with a cylindrical filter **characterized in that** the flow chamber has a side opening (6) with a cover and flat surfaces inside the flow chamber which diverge from a chamber rear wall (17) towards an edge (18) of the side opening (6) with respect to transverse symmetry axis (19), wherein interior of the flow chamber has on both opposite walls (12 and 15) projections (16) between which a cylindrical filter and wedge-formed ring gaskets (11) are placed wherein each ring gasket (11) has on its inner side a circular hollow (20) in which the cylindrical filter is situated.

2. The strainer according to claim 1, **characterized in that** the flat surfaces diverge from the chamber rear wall (17) in respect to a transverse symmetry axis (19) at an angle taking values between 1 and 3 degrees.

3. The strainer according to claim 1, **characterized in that** the ring gasket (11) has a cross-section which is cut off at one side where its thickness is minimal and is ended at the other side with a resistant element (21) where its thickness is maximal.

4. The strainer according to claim 1, **characterized in that** a slope angle of the wedge-formed ring gasket (11), takes values between 0.5 and 1.5 degrees.

5. The strainer according to claim 3, **characterized in that** the ring gasket (11) has a side channel on its outer side where an elastic ring (14) is placed.

6. The strainer according to claim 3, **characterized in that** the ring gasket (11) has circular elastic projections (13) on its outer side.

## Patentansprüche

1. Die Filtervorrichtung mit einem Einlass, verbunden mit dem Auslass mit Hilfe einer quer eingebrachten Flusskammer mit zylindrischem Filter, **dadurch gekennzeichnet, dass** die Flusskammer eine Seitenöffnung (6) mit einem Deckel und flache Oberflächen im Inneren der Flusskammer aufweist, die von der Hinterwand der Kammer (17) in Richtung des Randes (18) der Seitenöffnung (6) hinsichtlich der Querachse der Symmetrie (19) auseinander gehen, in der das Innere der Flusskammer an den beiden gegenüberliegenden Wänden (12 und 15) Vorsprünge (16) aufweist, zwischen denen ein Zylinderfilter und keilförmige Ringdichtungen (11) eingebracht wurden, wobei jede Ringdichtung (11) auf der inneren Seite eine runde Aushöhlung (20) aufweist, in der der Zylinderfilter eingebracht ist.

2. Die Filtervorrichtung nach Anspruch 1, **dadurch gekennzeichnet, dass** die flachen Oberflächen von der Hinterwand der Kammer (17) hinsichtlich der Querachse der Symmetrie (19) in einem Winkel mit Werten zwischen 1 und 3 Grad auseinander gehen.

3. Die Filtervorrichtung nach Anspruch 1, **dadurch gekennzeichnet, dass** die Ringdichtung (11) einen Querschnitt hat, der von der einen Seite an der Stelle, wo dessen Dicke minimal ist, abgeschnitten ist, und auf der anderen Seite mit einem Widerstandselement endet (21), wo dessen Dicke maximal ist.

4. Die Filtervorrichtung nach Anspruch 1, **dadurch gekennzeichnet, dass** der Neigungswinkel der keilförmigen Ringdichtung (11) Werte zwischen 0.5 und 1.5 Grad einnimmt.

5. Die Filtervorrichtung nach Anspruch 3, **dadurch gekennzeichnet, dass** die Ringdichtung (11) auf deren Außenseite einen Seitenkanal aufweist, in dem ein elastischer Ring (14) eingebracht wird.

6. Die Filtervorrichtung nach Anspruch 3, **dadurch gekennzeichnet, dass** die Ringdichtung (11) auf deren Außenseite runde elastische Vorsprünge (13) aufweist.

## Revendications

1. Dispositif de crépine comportant une entrée communiquant avec une sortie par l'intermédiaire d'une chambre de flux située de façon inclinée, avec un filtre cylindrique, **caractérisé en ce que** la chambre de flux comporte un orifice lateral (6) avec un couvercle et des surfaces plates à l'intérieur de la chambre de flux, qui divergent depuis la paroi arrière de la chambre (17) vers le bord (18) d'orifice lateral (6) par rapport à l'axe de symétrie transversal (19), dans lequel l'intérieur de la chambre de flux comporte des saillies (16) sur ses parois opposées (12 et 15), entre lesquelles un filtre cylindrique et un joint à anneau (11) en forme d'une cale sont placés, dans lequel chaque joint à anneau (11) sur sa face interne comporte un creux circulaire (20) dans lequel le filtre cylindrique est placé.

2. Dispositif de crépine selon la revendication 1, **caractérisé en ce que** les surfaces plates divergent depuis la paroi arrière de la chambre (17) par rapport à l'axe de symétrie transversal (19) sous l'angle compris entre 1 et 3 degrés.

3. Dispositif de crépine selon la revendication 1, **caractérisé en ce que** le joint à anneau (11) a une section transversale prenant naissance d'une part où l'épaisseur du joint est minimale, et se terminant d'autre part par un élément de butée (21) où l'épaisseur du joint est maximale.

4. Dispositif de crépine selon la revendication 1, **caractérisé en ce que** un angle d'inclinaison du joint à anneau (11) en forme d'une cale est compris entre 0.5 et 1.5 degrés.

5. Dispositif de crépine selon la revendication 3, **caractérisé en ce que** le joint à anneau (11) comporte un canal lateral sur sa face externe où se trouve un anneau souple (14).

6. Dispositif de crépine selon la revendication 3, **caractérisé en ce que** le joint à anneau (11) comporte sur sa face externe des souples saillies circulaires (13).
